# EUROPEAN PATENT APPLICATION

(11) **EP 4 350 939 A1**
(43) Date of publication of application: **10.04.2024**
(21) Application number: 22815856.4
(22) Date of filing: 18.05.2022
(51) Int. Cl.: H02J 7/02, H01M 10/44, H01M 10/48, H01M 10/613, H01M 10/615, H01M 50/253, H01M 50/284

(54) **STORAGE BATTERY SET AND STORAGE BATTERY SYSTEM**

(30) Priority: 31.05.2021 JP 2021091486
(71) Applicant: NGK Insulators, Ltd., Nagoya-shi, Aichi 467-8530 (JP)
(72) Inventor: FUKUHARA, Motohiro, Nagoya-shi, Aichi 467-8530 (JP)
(74) Representative: Mewburn Ellis LLP
(86) International application number: PCT/JP2022/020682
(87) International publication number: WO 2022/255104

(57) **Abstract**

Provided is a storage battery set and a storage battery system that are highly redundant against failures in battery cells. A module battery including at least one string in which multiple battery cells are connected in series, the multiple battery cells being high-temperature operating secondary batteries, the multiple battery cells included in the at least one string being divided into a plurality of cell groups, the module battery includes: a main path through which the plurality of cell groups are connected in series; and a bypass path allowing each of the plurality of cell groups to be individually bypassed in the at least one string, wherein when at least one of the multiple battery cells fails, an energizing path is diverted from the main path to the bypass path at a corresponding one of the plurality of cell groups to which the failed battery cell belongs.

## Description

### TECHNICAL FIELD

The present invention relates to a module battery obtained by connecting multiple high-temperature operating secondary batteries, and is particularly directed to a structure of an energizing path of the module battery.

### BACKGROUND ART

Sodium-sulfur battery (hereinafter referred to as NaS battery) has already been known as a storage battery to be connected to electric power systems and used. A single NaS battery (battery cell) is generally a high-temperature operating secondary battery with a structure of containing, in an isolated manner, metallic sodium (Na) and sulfur (S) that are active materials in a cell (battery enclosure) using beta-alumina that is a solid electrolyte with Na ion conductivity as a separator. The operating temperature is approximately 300°C. Electrochemical reaction of both of the active materials in a molten (liquid) state at the operating temperature generates electromotive force in the battery cell.

The NaS battery is normally used in a form of a module battery including a plurality of battery cells (a battery assembly) connected together and contained in a heat-insulating storage container to secure a desired capacity and a desired output (see, for example, Patent Document 1). In the module battery, a plurality of blocks are connected in series. Each of the blocks includes a plurality of circuits (strings) connected in parallel, and each of the circuits includes a plurality of battery cells connected in series.

There is a general need to increase more output of a module battery for NaS battery constituted by a plurality of battery cells and operate the module battery for a longer time than the conventional ones. If this is implemented by the conventional module battery including a plurality of strings connected in parallel as disclosed in, for example, Patent Document 1, this could be seemingly easily satisfied by increasing the number of battery cells (the number of direct connections) included in a string or increasing the number of blocks.

The module battery with the conventional structure as disclosed in Patent Document 1, however, sometimes has difficulty in adapting to increasing output due to the following reasons.

First, when a battery cell belonging to any of the strings in a block fails, all the battery cells, including battery cells operating normally, in the string including the failed battery cell become unavailable. Thus, the higher the number of battery cells connected in series in one string is, the more the battery cells that operate normally but become unavailable increases. This is not favorable in view of the usage efficiency of the battery cells.

Furthermore, if no current flows through a string in a block due to a failure in a battery cell, only the rest of strings in which all the battery cells operate normally (without any failed battery cell) maintain a voltage (output). In this case, obviously, the magnitude of a current flowing through battery cells included in the rest of strings needs to be increased to maintain the output equivalent to that before the failure. In other words, the more the number of strings with failed battery cells increases, the more the load in the battery cells included in the rest of strings increases. For example, if a module battery in which 12 strings are connected in parallel includes two strings with failures in battery cells, an overload ratio in the battery cells in the rest of strings becomes 12/(12 - 10) = 1.09 times.

Meanwhile, each of the strings includes a fuse to ensure safety so that a current exceeding a preset limit value (e.g., 200A) does not flow through a battery cell.

Therefore, the life of the conventional module battery depends on the number of strings including a failed battery cell and the limit current value of the battery cells. Increasing output impacts both of these factors.

Some consider that increasing the number of strings connected in parallel in advance reduces the magnitude of the current flowing through each of the strings with respect to the limit current value. However, this creates a problem in current designs, that is, a total current flowing at a normal time (a sum of currents flowing through the respective strings) increases more than necessary.

Moreover, reducing the total number of battery cells as much as possible and increasing output are desired in terms of cost.

The Inventor of the present invention has found, as a result of diligent researches, that increasing redundancy more against failures in battery cells, in other words, reducing the number of battery cells that become unavailable due to a failure in a battery cell as much as possible and preventing an increase in a current flowing through battery cells are effective at increasing output of a module battery, and thus has arrived at the present invention.

### PRIOR ART DOCUMENT

### PATENT DOCUMENT

Patent Document 1: WO2015/056739

### SUMMARY

The present invention has been conceived in view of the problem, and the object is to provide a storage battery set and a storage battery system that are highly redundant against failures in battery cells.

A first aspect of the present invention to solve the problem is a storage battery set including at least one string in which multiple battery cells are connected in series, the multiple battery cells being high-temperature operating secondary batteries including: a plurality of cell groups into which the multiple battery cells included in the at least one string are divided; a main path through which the plurality of cell groups are connected in series; and a bypass path allowing each of the plurality of cell groups to be individually bypassed in the at least one string, wherein, when at least one of the multiple battery cells fails, an energizing path is diverted from the main path to the bypass path at a corresponding one of the plurality of cell groups to which the failed battery cell belongs.

A second aspect of the present invention is the storage battery set according to the first aspect further comprising, switches that can switch between an ON conduction state and an OFF conduction state are disposed each between the cell groups connected in series through the main path from among the plurality of cell groups, and in bridge paths connecting the bypass path to upstream and downstream sides of the cell groups, wherein, when the at least one of the multiple battery cells fails, the energizing path is diverted from the main path to the bypass path by switching one of the switches corresponding to the cell group to which the failed battery cell belongs between the ON state and the OFF state.

A third aspect of the present invention is the storage battery set according to the second aspect, wherein the switches are gate switches each including semiconductor elements.

A fourth aspect of the present invention is the storage battery set according to the third aspect, wherein a module battery is provided per two of the cell groups connected in series from among the plurality of cell groups, the bypass path is provided for each of the module batteries, and each of the module batteries includes as the gate switches: an inter-group gate in the main path between the two cell groups; a module terminal gate in the main path between another module battery connected to the module battery and a downstream side of the two cell groups; four bridge gates connecting the bypass path provided in the module battery to an upstream side and the downstream of the two cell groups in the main path; and a terminal bridge gate connecting the bypass path formed in the module battery to a most downstream side of the main path.

A fifth aspect of the present invention is the storage battery set according to the fourth aspect, wherein each of the module batteries is contained in a storage container, the storage container includes a heater and a cooling fan, the battery cells belonging to the two cell groups are arranged for each of the cell groups and contained in the storage container in two rows, and the storage container includes a connector including the inter-group gate, the module terminal gate, and the four bridge gates, on a side surface of the storage container being vertical to a direction in which the battery cells are arranged.

A sixth aspect of the present invention is the storage battery set according to any one of the first to fifth aspects, wherein each of the plurality of cell groups include eight of the battery cells.

A seventh aspect of the present invention is the storage battery set according to any one of the first to sixth aspects, wherein the at least one string includes two strings of a first string and a second string, and when the energizing path is bypassed in the first string, an energizing path in the second string is also bypassed for cell groups as many as cell groups bypassed in the first string.

An eighth aspect of the present invention is a storage battery system including: the storage battery set according to any one of claims 1 to 7 further including a power conversion system connected to the at least one string; and a controller controlling the storage battery set, wherein the storage battery set is connected to a transformer.

A ninth aspect of the present invention is the storage battery system according to the eighth aspect including: a plurality of the storage battery sets; and a plurality of controllers controlling the respective storage battery sets, wherein the plurality of the storage battery sets are connected in parallel with the transformer.

According to the first to ninth aspects of the present invention, even when a certain battery cell included in a module battery fails, at least one cell group including the cell group to which the failed battery cell belongs is bypassed so as to allow a current to continue to flow through a string including the failed battery cell. This implements a highly redundant module battery system against failures of battery cells, and a rechargeable battery system including the module battery.

Particularly according to the third to fifth aspects, even when the number of failed battery cells increases, suitably defining ON/OFF states of the gate switches can prevent an increase in the number of the gate switches to form an energizing path due to the bypassing. Thus, the impact of a voltage drop caused by the increase in the number of the gate switches to form an energizing path due to a failure in a battery cell is suitably reduced.

Particularly according to the fourth and fifth aspects, when a battery cell fails, the ON/OFF state of each of the gate switches is switched per module battery. This does not impact the other module batteries belonging to the same string. Furthermore, as long as preventing an increase in the number of gate switches to be used, only in the module battery subjected to the switching control on the ON/OFF state, the number of gate switches to be used in the whole strings is never increased.

Particularly according to the seventh aspect, even when a battery cell fails in one of two strings, the electromagnetic forces in the two strings remain at the same value. Thus, the redundancy against failures of battery cells is more suitably ensured.

### BRIEF DESCRIPTION OF DRAWINGS

FIG. 1 schematically illustrates a structure of a storage battery system 1.
FIG. 2 illustrates a circuit structure in a part of strings ST.
FIG. 3 illustrates a current conduction state in the string ST in the absence of a failure in a battery cell.
FIG. 4 illustrates an example current conduction state in strings ST in the presence of a failure in one battery cell 5 in a certain one of the strings ST.
FIG. 5 illustrates, in the presence of failures in two battery cells 5 contained in the same container 11 in a certain one of the strings ST, an example current conduction state in the strings ST.
FIG. 6 is a top view exemplifying a state in which the battery cells 5 are contained in the storage container 11.
FIG. 7 is a side view exemplifying the state in which the battery cells 5 are contained in the storage container 11.
FIG. 8 is a side view exemplifying the state in which the battery cells 5 are contained in the storage container 11.
FIG. 9 illustrates a schematic structure of a module battery compartment 100.

### DESCRIPTION OF EMBODIMENTS

### <Structure of storage battery system>

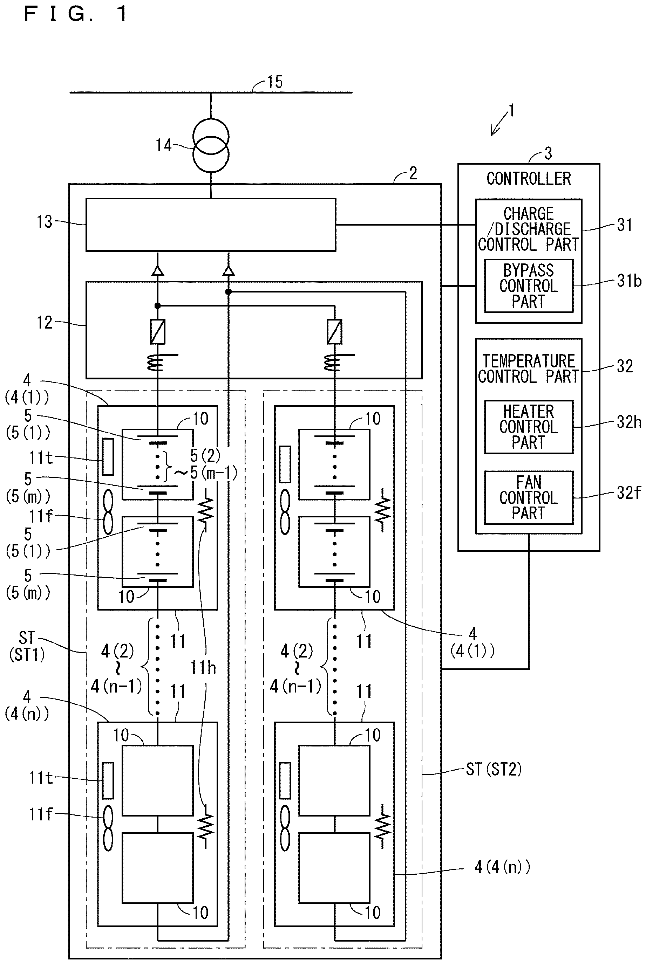

FIG. 1 schematically illustrates a structure of a storage battery system 1 according to an embodiment. The storage battery system 1 includes a storage battery set 2 including a plurality of battery cells 5 that are storage batteries, and a controller 3 that controls the storage battery set 2.

The storage battery set 2 generally includes two strings ST (ST1 and ST2) in each of which the plurality of battery cells (also referred to as cells) 5 are connected in series with each other. In each of the strings ST, one cell group 10 is formed per m battery cells 5 (5 (1) to 5 (m)) that are sequentially connected in series with each other, where m is a natural number. Furthermore, the two cell groups 10 connected in series with each other are contained in one storage container 11 and constitute one module battery 4. FIG. 1 exemplifies a case where the battery cells 5 included in each of the strings ST form the n module batteries 4 (4(1) to 4(n)), where n is a natural number.

In other words, in FIG. 1, n × 2m = 2mn battery cells 5 connected in series with each other constitute one string ST. In each of the strings ST, the 2mn battery cells 5 are divided and contained in the n storage containers 11 each 2m battery cells 5, thus constituting the n module batteries 4. The total number of the battery cells in the whole storage battery set 2 is 2mn × 2 = 4mn. In each of the n module batteries 4, the 2m battery cells 5 are divided into the two cell groups 10. Specific values of m and n are identical in the respective strings ST. A more detailed structure of the strings ST will be described later.

Each of the battery cells 5 is a sodium-sulfur battery (NaS battery). Specifically, each of the battery cells 5 is a high-temperature operating secondary battery using metallic sodium (Na) and sulfur (S) as active materials, and using beta-alumina that is a solid electrolyte with Na ion conductivity as a separator that separates metallic sodium (Na) from sulfur (S). In the following description, the electromagnetic force when one of the battery cells 5 is discharged is represented by V0.

Each of the storage containers 11 includes a heater 11h that heats the battery cells 5 during standby to keep both of the active materials in a molten (liquid) state, a fan 11f that cools the battery cells 5 that generate heat caused by reaction of the active materials during an operation, and a temperature sensor 11t that monitors (senses) the temperature inside the storage container 11. Although FIG. 1 merely schematically illustrates the heater 11h, the fan 11f, and the temperature sensor 11t in each of the storage containers 11 one by one, their actual numbers and arrangement aspects may be appropriately set.

The string (first string) ST1 and the string (second string) ST2 are connected in parallel to a DC side of a power conversion system (PCS) 13 through a terminal unit 12 including fuses that prevent an excessively large current from flowing through the respective strings. An AC side of the PCS 13 is connected to a transformer 14 that is connected to an electric power system 15 outside the storage battery set 2.

Although the embodiment is directed to a structure that the storage battery system 1 includes only the single storage battery set 2 for the sake of simplicity of the description, this is not an essential aspect. In another aspect, a plurality of storage battery sets 2 may be connected in parallel with the transformer 14.

The controller 3 mainly includes a charge/discharge control part 31 that controls charging/discharging operations in the storage battery set 2, and a temperature control part 32 that controls temperatures of the storage containers 11 during both of an operation and a wait. The controller 3 can be implemented by causing a dedicated or general-purpose computer (not illustrated) including a CPU, a memory, and a storage to execute a predetermined operating program. The charge/discharge control part 31 and the temperature control part 32 are implemented as virtual constituent elements in the computer.

The charge/discharge control part 31 includes a bypass control part 31b. The bypass control part 31b generally has a function of, when any one of the battery cells 5 in each of the strings ST fails due to a certain cause, switching an energizing path in the string ST so that the cell group 10 including the failed battery cell 5 is bypassed.

The temperature control part 32 includes a heater control part 32h and a fan control part 32f. The heater control part 32h and the fan control part 32f control operations of the heaters 11h and the fans 11f, respectively, according to output signals from the temperature sensors 11t included in the storage containers 11. Generally speaking, controlling ON/OFF of heating operations by the heaters 11h under control of the heater control part 32h enables to maintain the temperature of the battery cells 5 in the storage containers 11 at a predetermined atmospheric temperature (e.g., approximately 300°C) during standby. Controlling ON/OFF of blowing operations by the fans 11f under control of the fan control part 32f enables to cool the battery cells 5 that generate heat from reaction of the active materials during an operation.

### <Detailed structure of strings>

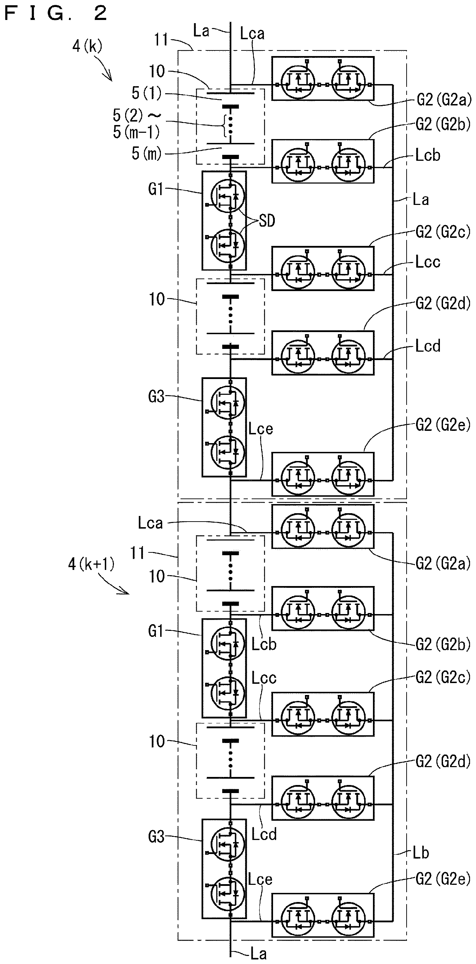

Next, the more detailed structure of the strings ST (ST1 and ST2) will be described. FIG. 2 illustrates a circuit structure in a part of the strings ST. Since the two strings ST1 and ST2 included in the storage battery set 2 have the same structure, FIG. 2 illustrates only one of the strings ST.

Specifically, FIG. 2 illustrates connection states in the vicinity of the battery cells 5 contained in the storage container 11 formed for the k-th module battery 4 (k) and the storage container 11 formed for the (k+1)-th module battery 4 (k+1) in the string ST, where k is a natural number lower than or equal to (n - 1).

In the following description, a path through which the battery cells 5 are connected in series in each of the strings ST will be referred to as a main path La. In the drawing perspective, an upward direction of the main path La will be described as upstream, whereas a downward direction thereof will be described as downstream for convenience. In each of the strings ST, current flows downstream upon charge, and current flows upstream upon discharge.

As described above, the 2m battery cells 5 are divided into the two cell groups 10 each m battery cells 5, and are contained in the storage container 11 in the string ST. FIG. 1 illustrates the 2m battery cells 5 merely connected in series with each other for the sake of simplicity.

However, an inter-group gate G1 is interposed between the two cell groups 10 contained in each of the storage containers 11 through the main path La in the actual string ST as illustrated in FIG. 2.

In addition, a bypass path Lb is provided in each of the containers 11 in the string ST, aside from the main path La. The bypass path Lb is regarded as being formed in parallel with the main path La in the circuit structure. Thus, the terms "upstream" and "downstream" are also used for the bypass path Lb according to upward and downward directions in the drawing perspective, similarly to the main path La.

Then, four bridge paths Lca, Lcb, Lcc, and Led respectively connecting upstream and downstream of each of the two cell groups 10 in the main path La to the bypass path Lb are provided, and respective bridge path Lca, Lcb, Lcc, and Led include bridge gates G2a, G2b, G2c, and G2d in order.

Furthermore, a module terminal gate G3 is provided downstream of the two cell groups 10 contained in each of the storage containers 11 in the main path La. In the string ST, the battery cells 5 belonging to the cell groups 10 contained in the different storage containers 11 are connected in series with each other in the main path La. The module terminal gate G3 is interposed in the main path La between the cell groups 10 in the different storage containers 11. In other words, the module terminal gate G3 is in common with the inter-group gate G1 in being interposed in the main path La between the cell groups 10.

A bridge path Lce connects downstream of the module terminal gate G3 in the main path La to the bypass path Lb in the storage container 11. Furthermore, the bridge path Lce includes a bridge gate G2e. In the following description, the bridge gate G2e may be particularly referred to as a terminal bridge gate G2e.

The most upstream side of the main path La (the upstream side of the cell group 10 contained in the storage container 11 formed for the module battery 4(1)) and the most downstream side of the main path La (the downstream side of the cell group 10 contained in the storage container 11 formed for the module battery 4(n)) are connected to the PCS 13, though FIG. 2 omits the illustration.

The inter-group gate G1, the five bridge gates G2 (G2a, G2b, G2c, G2d, G2e), and the module terminal gate G3 are gate switches with the same structure each including two semiconductor devices (i.e., MOSFETs) SD. In the following description, a state in which current flows through these gate switches will be referred to as "an ON state" or simply "ON", and a state in which current does not flow through these gate switches will be referred to as "an OFF state" or simply "OFF". The bypass control part 31b controls the ON/OFF states of these gate switches.

In the storage battery system 1 according to the embodiment, the bypass control part 31b performs bypass control of switching the ON/OFF state of each of the gate switches, according to a failure state (a failure position and the number of failures) of the battery cell 5 in each of the strings ST included in the storage battery set 2 during the operation (upon charge/discharge). Thereby, the storage battery system 1 allows a current to flow through the string ST by bypassing only a selected specific one of the cell groups 10.

### <Bypass control in storage battery set>

Hereinafter, the bypass control when the storage battery system 1 operates, and a current conduction state implemented by this control will be described stepwise according to the extent of failures in the battery cells 5.

In principle, the multiple battery cells 5 are included in the string ST, with divided into a plurality of the cell groups 10 and connected in series with each other in the storage battery system 1 according to the embodiment, and, when a certain one of the battery cells 5 fails, the cell group 10 including the certain battery cell 5 is treated as a unit of bypass. In other words, the cell groups 10 that belong to the same string ST but does not include the failed battery cell 5 are used as they are after the failure.

When a certain one of the cell groups 10 is bypassed, the maximum electromagnetic force in the string ST is reduced for the certain cell group 10. Allowing a current larger than that in the absence of a failure within a preset limit value to flow through the string ST with the electromagnetic force reduced in the aforementioned state can produce the output as much as that in the absence of a failure. Here, an overload ratio that is a ratio of the magnitude of a current flowing through each of the battery cells 5 in such a case to the magnitude of a current flowing through the battery cell 5 without any failure is expressed by values of 2mn/(2mn - αm) = 2n/(2n - α), where α denotes the number of failed battery cells. The larger the value of the overload ratio is, the more the current flowing through the battery cells 5 approximates to the limit value.

### (In the absence of failure in battery cell)

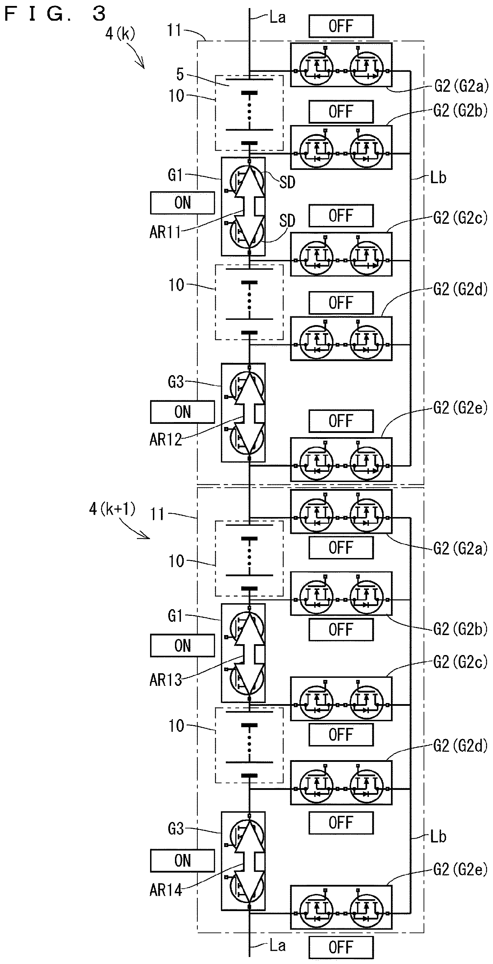

FIG. 3 illustrates a current conduction state in the string ST in the absence of a failure in the battery cell. Specifically, FIG. 3 illustrates not only the circuit structure in the part of the string ST identical to that in FIG. 2 but also the ON/OFF states of the respective gate switches and the energizing path implemented by the state of the gate switches.

When any of the battery cells 5 does not fail, the bypass control part 31b places all the inter-group gates G1 and the module terminal gates G3 included in the string ST in an ON state, and places all the bridge gates G2 (G2a, G2b, G2c, G2d, G2e) in an OFF state. This allows a current to flow through only the main path La as indicated by arrows AR11 to AR14, and disallows a current to flow through the bypass paths Lb and each of the bridge paths in any of the strings ST. Since the two strings ST1 and ST2 in each of which the 2mn battery cells 5 are directly connected with each other are connected in parallel in the storage battery set 2 in the aforementioned case, the storage battery set 2 produces the electromagnetic force as high as 2mn V0 at the maximum upon discharge.

### (In the presence of failure in one battery cell in certain string)

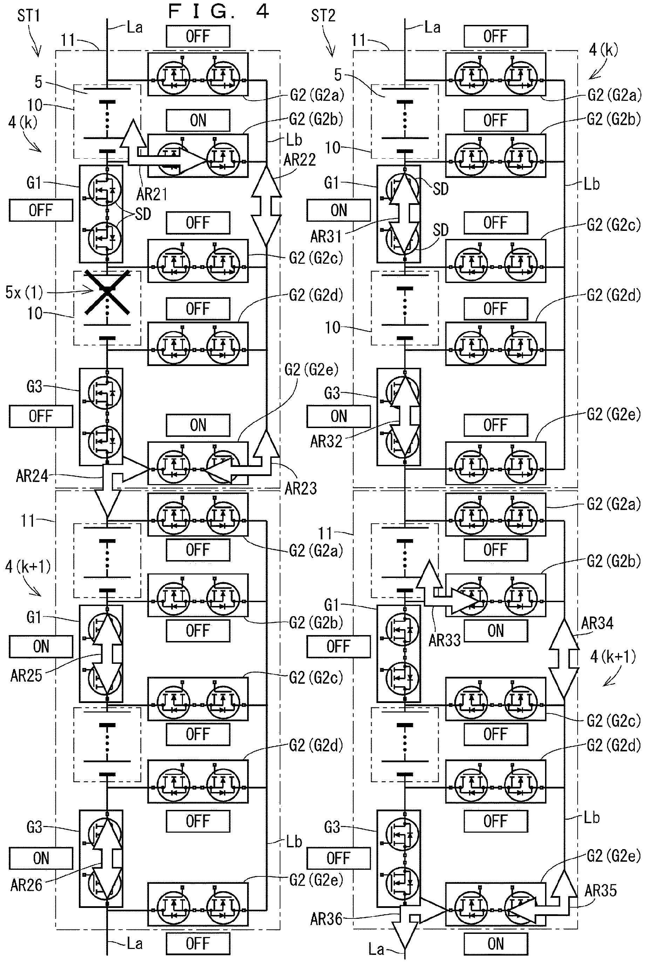

FIG. 4 illustrates an example current conduction state in the strings ST in the presence of a failure in one of the battery cells 5 in a certain one of the strings ST.

Specifically, FIG. 4 illustrates connection states in the vicinity of the battery cells 5 contained in the storage container 11 formed for the k-th module battery 4 (k) and the storage container 11 formed for the (k+1)-th module battery 4 (k+1) similarly to FIG. 2, in each of the strings ST1 and ST2.

Assume now that the battery cell 5x (1) belonging to the module battery 4 (k) in the string ST1 fails. When the charge/discharge control part 31 senses the failure, the bypass control part 31b switches the inter-group gate G1 and the module terminal gate G3 included in the main path La of the module battery 4 (k) to which the failed battery cell 5x (1) belongs from the ON state to the OFF state, and also switches the bridge gate G2b included in the bridge path Lcb connected upstream of the inter-group gate G1, and the terminal bridge gate G2e included in the bridge path Lee connected the most downstream of the module battery 4 (k) from the OFF state to the ON state.

This disallows a current to flow through the cell group 10 to which the failed battery cell 5x (1) belongs and the inter-group gate G1 and the module terminal gate G3 which sandwich the same in the module battery 4 (k) of the string ST1. Instead, an energizing path is diverted to a path from the main path La to the bridge path Lcb, the bypass path Lb, and the terminal bridge path Lce as indicated by arrows AR21 to AR24.

In the string ST1 excluding the module battery 4 (k) to which the failed battery cell 5 belongs, the main path La is maintained as the energizing path, for example, as indicated by arrows AR25 and AR26, similarly to that in the absence of a failure in the battery cell 5.

When a certain one of the battery cells 5 fails in the storage battery system 1 according to the embodiment, the cell group 10 including the failed battery cell 5 is bypassed in principle by switching the first inter-group gate G1 from the ON state to the OFF state, and switching respective one of the bridge gates G2 among the bridge gates G2 respectively located upstream and downstream of the cell group 10 from the OFF state to the ON state, so that intended bypass is implemented.

For example, switching the first inter-group gate G1 from the ON state to the OFF state, and switching the bridge gate G2b and G2d from the OFF state to the ON state in the case of FIG. 4 can bypass the cell group 10 including the failed battery cell 5x (1). This bypassing increases the number of gate switches forming an energizing path by one.

However, the more the number of gate switches increases, the more the resistance loss increases. Thus, preventing an increase in the number of gate switches as much as possible is desired in the bypassing.

In view of this, not only the inter-group gate G1 but also the module terminal gate G3 in the main path La are switched from the ON state to the OFF state, and the terminal bridge gate G2e is used as a gate switch for the bypassing downstream of the cell group 10 including the failed battery cell 5x (1) in the example illustrated in FIG. 4. This does not change the number of gate switches to be used before and after the bypassing. Consequently, the bypassing does not increase the resistance loss.

When the battery cell 5 belonging to not the cell group 10 to which the battery cell 5x (1) belongs but the other cell group 10 contained in the same storage container 11 fails, the bypass control part 31b switches the inter-group gate G1 included in the storage container 11 (k) of the string ST1 from the ON state to the OFF state, and also switches the bridge gate G2a included in the bridge path Lca connected upstream of the cell group 10 to which the failed battery cell 5 belongs, and the bridge gate G2c included in the bridge path Lcc connected downstream of the inter-group gate G1 from the OFF state to the ON state, though the illustration is omitted.

In this case, no current flows through the cell group 10 to which the failed battery cell 5 belongs and the inter-group gate G1 located downstream of the cell group 10 in the module battery 4 (k) of the string ST1. Instead, the energizing path is diverted to a path from the main path La to the bridge path Lca, the bypass path Lb, and the bridge path Lcc. This bypassing increases the number of gate switches forming the energizing path by one.

In any of the cases, when the battery cell 5 belonging to the string ST1 fails, the maximum electromagnetic force in the string ST1 is reduced by m V0, from a value of 2mn V0 in a state without any failed battery cell 5.

Merely by bypassing in the string ST1, the maximum electromagnetic force in the string ST2 is still maintained at the value of 2mn V0. Thus, the electromagnetic force in the string ST1 is not balanced with that in the string ST2 connected in parallel with the string ST1. Thus, when a failure in the battery cell 5 belonging to a certain one of the cell groups 10 in one of the two strings ST in the storage battery system 1 according to the embodiment reduces the maximum electromagnetic force in the string ST, the electromagnetic force in the string ST to which the failed battery cell does not belong is intentionally reduced as much as that in the string ST including the failed battery cell 5.

Specifically, switching the ON/OFF states of the gate switches prevents a current from flowing through any one of the cell groups 10. Furthermore, the energizing path in the string ST to which the failed battery cell 5 does not belong is bypassed in the same manner as that in the string ST including the failed battery cell 5.

In the case of FIG. 4, the bypassing is performed in the module battery 4 (k+1) in the string ST2 to which the failed battery cell 5x (1) does not belong. Specifically, the inter-group gate G1 and the module terminal gate G3 belonging to the module battery 4 (k+1) are switched from the ON state to the OFF state, and the bridge gate G2b included in the bridge path Lcb connected upstream of the inter-group gate G1, and the terminal bridge gate G2e included in the bridge path Lce are switched from the OFF state to the ON state.

This disallows a current to flow through the inter-group gate G1 and the cell group 10 located downstream of the inter-group gate G1 in the module battery 4 (k+1) of the string ST2. Instead, the energizing path is diverted to a path from the main path La to the bridge path Lcb, the bypass path Lb, and the bridge path Lce as indicated by arrows AR33 to AR36.

In the string ST2 excluding the module battery 4 (k+1), the main path La is maintained as the energizing path as indicated by, for example, arrows AR31 and AR32.

As a result, the maximum electromagnetic force in the string ST2 is also reduced by mV0 from the value of 2mnV0. The strings ST1 and ST2 have the same maximum electromagnetic force as expressed by 2mnV0 - mV0 = (2n-1)mV0.

Basically, in the string ST to which the failed battery cell 5 does not belong, any of the cell groups 10 is selected to be bypassed. Thus, FIG. 4 merely exemplifies that the cell group 10 belonging to the module battery 4 (k+1) in the string ST2 is selected as a bypassed target. The cell group 10 contained in the same or different storage container 11 may be selected as a bypassed target. In such a case, the cell group 10 and the inter-group gate G1 contained in the same storage container 11 are bypassed by the two bridge paths and the bypass path Lb.

Alternatively, the existence of the battery cell 5 approaching the life is known in advance from an operation state or the like, the battery cell 5 should be preferentially selected as a bypassed target.

As described above, when one of the battery cells 5 belonging to any of the strings ST fails, the storage battery set 2 continues to be used as a battery with the maximum electromagnetic force of (2n-1)mY0.

### (In the presence of failures in two battery cells)

Next, assume a case where one of the battery cells 5 fails as illustrated in FIG. 4 and then an additional one of the battery cells 5 fails. There are the following three cases (i) to (iii).

### [Case (i): the battery cell 5 fails in the string ST to which the first failed battery cell 5 does not belong]

In this case, the bypass control part 31b switches the ON/OFF states of target gate switches so that the cell group 10 including the newly failed battery cell 5 is bypassed in the string ST to which the newly failed battery cell 5 belongs, instead of the cell group 10 having been selected as a bypassed target so as to match the maximum electromagnetic force, despite the absence of the failed battery cell 5.

Thus, in the case (i), the storage battery set 2 continues to be used as a battery with the maximum electromagnetic force of (2n-1) mV0 as before.

### [Case (ii): in the string ST to which the first failed battery cell 5 belongs, the battery cell 5 belonging to the module battery 4 to which the first failed battery cell 5 belongs fails]

In this case, the cell group 10 including the newly failed battery cell 5 is further bypassed in the string ST to which the first failed battery cell 5 belongs. In addition, any of the cell groups 10 is further bypassed in the string ST to which the failed battery cell 5 does not belong so as to match the electromagnetic force.

Specifically, in the string ST to which the two failed battery cells 5 belong, two of the cell groups 10 in the module battery 4 to which the two battery cells 5 respectively belong are collectively bypassed. In the string ST without any failed battery cell, any two of the cell groups 10 are selected from the whole string ST and bypassed. In such a case, the cell group 10 bypassed when the number of the failed battery cells 5 is only one may continue to be bypassed, or two of the cell groups 10 may be newly selected and bypassed.

In any of the cases, the maximum electromagnetic force in each of the strings ST in the case (ii) is reduced further by m V0 from that when the number of the failed battery cells 5 is only one. Thus, in the case (ii), the storage battery set 2 continues to be used as a battery with the maximum electromagnetic force of 2(n-1) mV0.

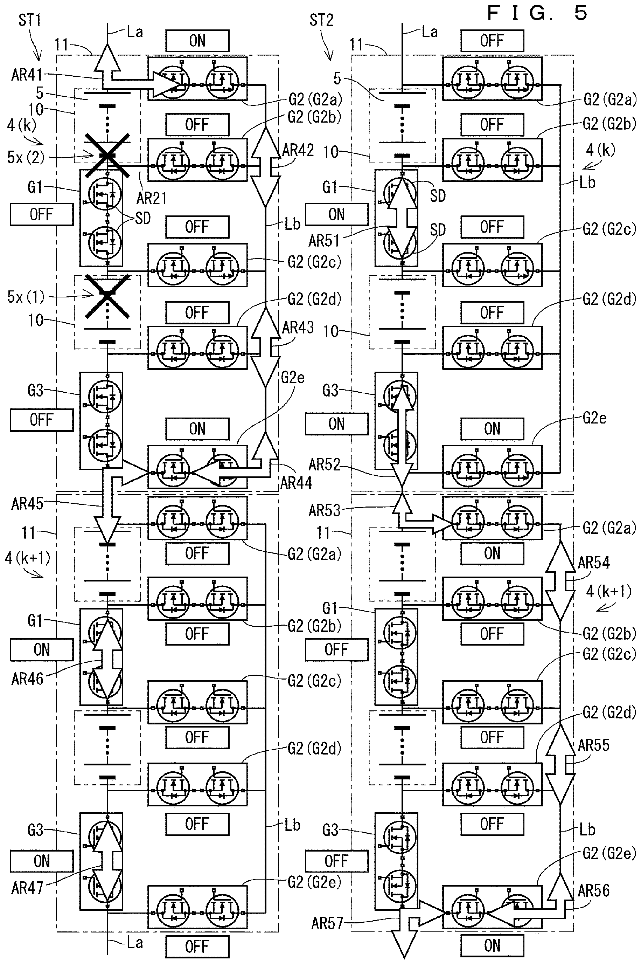

FIG. 5 illustrates, in the presence of failures in the two battery cells 5 contained in the same container 11 in a certain one of the strings ST, an example current conduction state in the strings ST to exemplify the case (ii).

Specifically, FIG. 5 illustrates that when the battery cell 5x (1) belonging to one of the cell groups 10 included in the module battery 4 (k) in the string ST1 is the battery cell 5 that has failed earlier (failed firstly) as illustrated in FIG. 4, the battery cell 5x (2) belonging to the other cell group 10 contained in the same storage container 11 newly fails (fails secondly) and thus these two cell groups 10 are bypassed.

FIG. 5 also illustrates bypassing the two cell groups 10 contained in one of the containers in the string ST2 without any failed battery cell 5, by further bypassing the other cell group 10 included in the module battery 4 (k+1) identical to that including the cell group 10 bypassed when the number of the failed battery cells 5 is one as illustrated in FIG. 4.

First, the string ST1 will be described. As a result of newly sensing a failure in the battery cell 5x (2) by the charge/discharge control part 31, the bypass control part 31b switches the bridge gate G2a included in the bridge path Lca connected upstream of the cell group 10 to which the failed battery cell 5x (2) belongs from the OFF state to the ON state, and also switches again the bridge gate G2b included in the bridge path Lcb that has been in the ON state after the failure in the battery cell 5x (1) from the ON state to the OFF state.

This disallows a current to flow through the cell groups 10 to which the failed battery cells 5x (1) and 5x (2) respectively belong and the inter-group gate G1 therebetween in the module battery 4 (k) in the string ST1. Instead, an energizing path is diverted to a path from the main path La to the bridge path Lca, the bypass path Lb, and an ex-container bridge path Le as indicated by arrows AR41 to AR45. In the string ST1 excluding the module battery 4 (k) to which the two failed battery cells 5 (5x (1) and 5x (2)) belong, the main path La is maintained as an energizing path, for example, as indicated by arrows AR46 and AR47, similarly to that in the absence of a failure in the battery cell 5.

Next, the string ST2 will be described. The bypass control part 31b switches the bridge gate G2b included in the bridge path Lca from the OFF state to the ON state, and switches the bridge gate G2b included in the bridge path Lcb from the ON state to the OFF state to bypass the other cell group 10 belonging to the same storage container 11 further from the state illustrated in FIG. 4.

Switching at least these makes the ON/OFF states of the gate switches in the module battery 4 (k+1) in the string ST2 identical to those in the module battery 4 (k) in the string ST1 to which the failed battery cells 5 belong. Thus, the aforementioned switching renders bypassing the two cell groups 10 included in the storage container 11 included in the module battery 4 (k+1) in the energizing path of the string ST2.

Unlike the case in FIG. 5, there is no need to assume a case where the second failed battery cell 5 belongs to the same cell group 10 to which the first failed battery cell 5 belongs. This is because, after a certain one of the battery cells 5 fails in any of the cell groups 10 included in the storage battery set 2, this cell group 10 is set to a bypassed target and no current passes through that cell group 10. Thus, an additional failure never occurs.

### [Case (iii): in the string ST to which the first failed battery cell 5 belongs, the battery cell 5 belonging to the module battery 4 different from that of the first failed battery cell 5 fails]

In this case, the bypass control part 31b switches the ON/OFF states of target gate switches so that the cell groups 10 are newly bypassed, in each of the module battery 4 including the cell group 10 to which the second failed battery cell 5 belongs and the module battery 4 in the other string ST without any failed battery cell 5. In the string ST without any failed battery cell 5, the cell group 10 newly bypassed and the cell group 10 first bypassed may be contained in the same storage container 11 and form one of the module batteries 4, or may be contained in the different storage containers 11 and included in the different module batteries 4. When the cell groups 10 to be bypassed are contained in the same storage container 11, the bypass aspect as exemplified by the storage container 11 (k) of the string ST1 and the storage container 11 (k+1) of the string ST2 in FIG. 5 may be adopted.

Thus, in the case (iii), the storage battery set 2 continues to be used as a battery with the maximum electromagnetic force of 2(n-1) mV0 because the maximum electromagnetic force in each of the strings ST is reduced further by mV0.

### (In the presence of failures in three or more battery cells)

After the failure in the second battery cell 5, failures of many more of the battery cells 5 can be basically addressed by switching the ON/OFF states of the gate switches included in the storage container 11 containing the cell group 10 to which the newly failed battery cell 5 belongs, in the aforementioned manner when one or two of the battery cells 5 fail.

The more the number of the failed battery cells 5 increases, the more the overload ratio in the rest of the battery cells 5 increases, and the more the flowing current approximates to the limit value. Thus, the number of the failed battery cells 5 allowed in the storage battery set 2 is preset according to the overload ratio or the limit value of the current.

When an energizing path is switched each time the battery cell 5 fails, a gate switch whose ON/OFF state is to be switched is selected to prevent an increase in the number of gate switches forming the energizing path as much as possible.

### (Characteristics and advantages of bypass control)

As described above, each of the module batteries 4 in the two strings ST (ST1 and ST2) included in the storage battery set 2 according to the embodiment includes: the main path La through which the battery cells 5 divided into the cell groups 10 are connected in series with each other; the bypass path Lb; and the gate switches (the inter-group gate G1, the bridge gates G2a, G2b, G2c, G2d, and G2e, and the module terminal gate G3) between the cell groups 10 in the main path La and in the bridge paths connecting the main path La to the bypass paths Lb.

In the absence of any failure in the battery cell 5, current passes only through the main path La in each of the strings ST. When the battery cell 5 fails in any of the strings ST, the ON/OFF states of the gate switches are appropriately switched in a location with the failed battery cell 5 and the cell group 10 including the failed battery cell 5 is bypassed to the bypass path Lb. Furthermore, similar bypassing is also performed in the string ST without any of the failed battery cell 5 to match the maximum electromagnetic force in the two strings ST.

This suitably reduces the impact of the failure of the battery cell 5 over the output of the whole storage battery set 2, even when the storage battery set 2 adopts a structure with a larger number of the battery cells 5 connected in series in each of the strings ST and a smaller number of the strings ST connected in parallel.

Particularly, reducing m that is the number of the battery cells 5 included in one of the cell groups 10 to a relatively smaller value as well as increasing the value n that is the number of the module batteries 4 renders not only sufficiently maintaining the maximum electromagnetic force but also preventing an increase in the overload ratio.

Specifically, it is suitable that m is less than 10 (e.g., 8) and n is approximately several tens (e.g., 35). It is to be noted that when the value n is a certain value, the smaller the value m is, the more the number of necessary gate switches increases.

Assuming a case where m = 8, n = 35, and the electromagnetic force V0 of the battery cell 5 is 2V as a model case, the total number of the battery cells in the storage battery set 2 in the model case is 1120, the maximum electromagnetic force in the absence of a failure in the battery cells 5 is 1120 V, the number of the storage battery sets 2 unavailable when the four battery cells 5 fail remains at 64, and the overload ratio becomes 2 × 35/(2 × 35 - 4) = 1.061.

Assuming a case where a module battery including 12 strings connected in parallel and each including 96 battery cells connected in series, that is, 1152 battery cells in total as an example conventional module battery without any bypass path, the maximum electromagnetic force of the module battery remains at 96 × 2 = 192 V, despite the fact that the number of the battery cells is many. Even when the battery cells belonging to the two strings fail one by one, the overload ratio is 12/10 = 1.09, which exceeds the overload ratio in the model case.

This indicates that adopting the structure of the module battery according to the embodiment can reduce the number of battery cells more than the conventional module batteries and implement a highly redundant module battery against failures.

Each of the strings ST included in the storage battery set 2 includes three types of the gate switches, that is, the inter-group gates G1, the bridge gates G2, and the module terminal gates G3 according to the embodiment. In the absence of a failure in the battery cells 5, only two of the inter-group gate G1 and the module terminal gate G3 in each of the storage containers 11 are set to the ON state. Then, the bypass control part 31b switches the ON/OFF states of the gate switches according to a subsequent failure state in the battery cells 5.

Providing the bridge gates G2a, G2b, G2c, and G2d included in the four bridge paths Lca, Lcb, Lcc, and Lcd, respectively, which connect the main path La to the bypass path Lb upstream and downstream of the cell groups 10 will suffice simply to bypass the cell group 10 including the failed battery cell 5. In other words, the inter-group gate G1, the module terminal gate G3, the bridge path Lce, and the terminal bridge gate G2e included in the bridge path Lce, and further the bypass path Lb excluding a portion between the bridge gates G2a and G2b and a portion between G2c and G2d can be omitted.

Despite the fact, the storage battery set 2 according to the embodiment includes these, because an increase in the resistance loss as the number of gate switches forming the energizing path for the bypassing increases by one is prevented as much as possible. The more the number of gate switches included in the energizing path increases, the more a voltage sag caused by this in the string ST increases.

For example, when the aforementioned elements described as being capable of omission are actually omitted, each time a certain one of the strings ST has the cell group 10 required to be newly bypassed, the number of the gate switches to be passed for the bypassing increases by two.

In contrast, when any one of the two cell groups 10 contained in the storage container 11 is first bypassed in a structure with the gate switches being arranged as according to the embodiment, the number of the gate switches to form an energizing path increases by one as a result of balancing only in the case that the cell group 10 located upstream is bypassed. As illustrated in FIG. 4, when the cell group 10 located downstream is bypassed, the number of the gate switches to be used remains unchanged at two identical to that before execution of the bypassing.

Furthermore, when the other of the cell groups 10 contained in the same storage container 11 identical to that of the cell group 10 bypassed earlier and included in the module battery 4 together with the cell group 10 bypassed earlier is further bypassed, only two of the bridge gate G2a and the terminal bridge gate G2e are set to the ON state. Thus, the number of gate switches to be an energizing path is identical to that without any failure in the battery cell 5.

Since the number of gate switches to be an energizing path for the bypassing in the storage battery set 2 according to the embodiment is minimized, the impact of a voltage drop caused by an increase in the number of gate switches due to a failure in the battery cell 5 is suitably reduced.

Furthermore, in the storage battery system 1 according to the embodiment, the storage battery set 2 includes the two strings ST (ST1 and ST2) having the same structure and connected in parallel. When the battery cell 5 in one of the strings ST fails and one or more of the cell groups 10 including the failed battery cell 5 are bypassed, the cell groups 10 as many as those in the one of the strings ST are bypassed in the other string ST.

This reduces the maximum electromagnetic force in each of the strings ST by the same value (specifically, the electromagnetic force V0 of the battery cell × the number of the battery cells 5 belonging to one of the cell groups 10 × the number of the cell groups 10 to which the failed battery cells 5 belong). Even when the battery cell 5 fails in any of the strings ST, the electromagnetic forces in the two strings remain at the same value. This also contributes to ensuring redundancy against failures in battery cells.

### (Example specific structure of storage battery set)

An example specific structure of the storage battery set 2 with the aforementioned characteristics will be hereinafter described. The following description will exemplify a case where the cell group 10 includes the eight battery cells 5 (a case of m = 8).

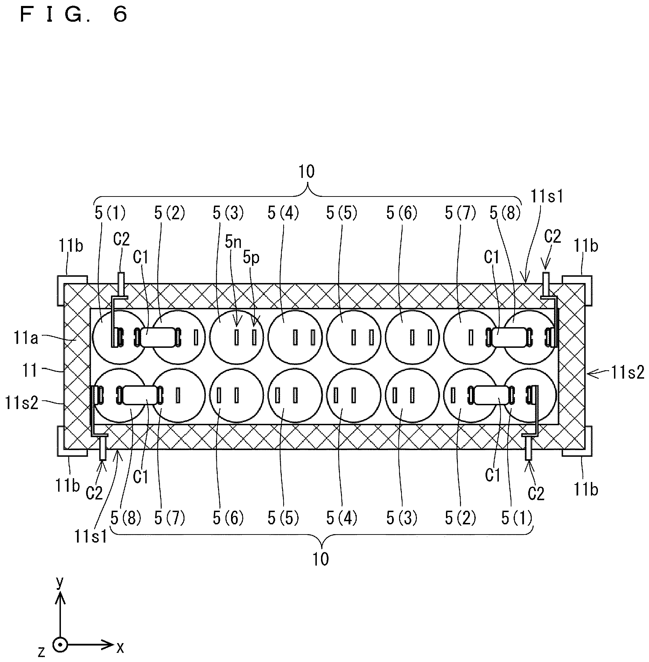

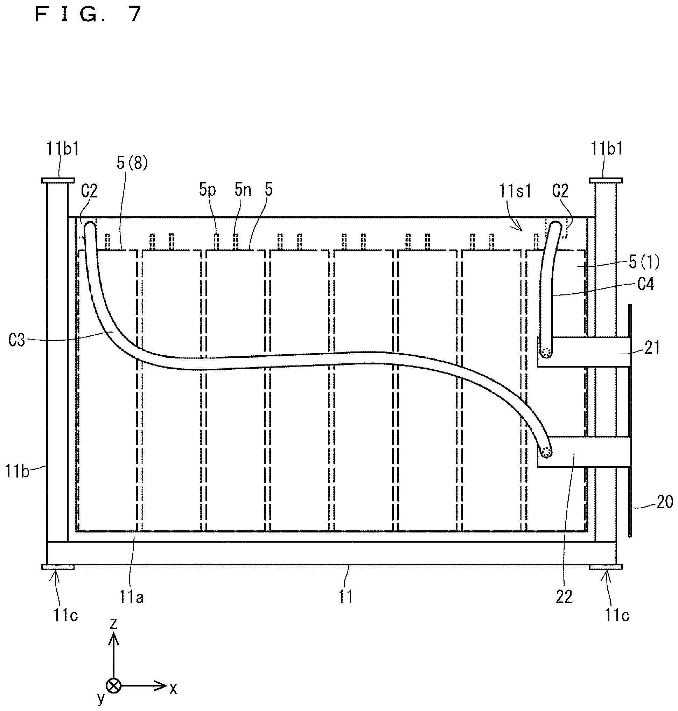

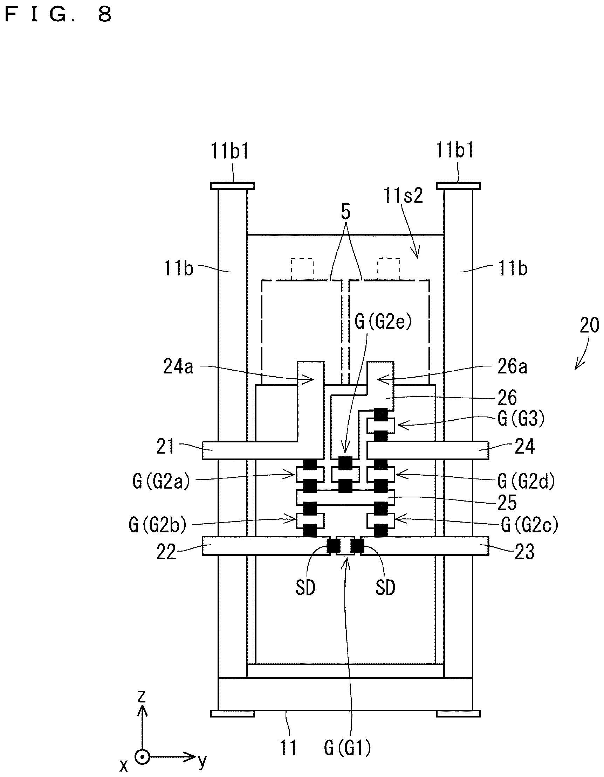

FIG. 6 is a top view exemplifying a state in which the battery cells 5 are contained in the storage container 11. FIGS. 7 and 8 are side views illustrating different orientations of the storage container 11 in the containing state. In other words, FIGS. 6 to 8 illustrate an example structure of one of the module batteries 4. FIG. 6 to the subsequent drawings illustrate a right-handed xyz coordinate system, using a long-side direction of the storage container 11 in a plan view (the horizontal direction in FIG. 6) as an x-axis direction, a short-side direction of the storage container 11 in the plan view (the vertical direction in FIG. 6) as a y-axis direction, and a perpendicular direction of the storage container 11 in the plan view as a z-axis direction.

The storage container 11 in FIG. 6 is generally a cuboid container whose external and inner surfaces are each made of a metal plate and in which a heat-insulating material fills a heat-insulating material 1 1a in portions between the metal plates on the side surfaces and at the bottom surface.

Furthermore, the bottom surface and the side surface of the storage container 11 are supported by a support frame 11b including mounted portions 11b1 at upper ends at four corners on which the other storage container 11 can be stack mounted. Furthermore, the storage container 11 includes mounting portions 11c at four corners at the bottom which can be stack mounted on the mounted portions 11b1 of the other storage container 11. In other words, the container 11 has a structure stackable in the perpendicular direction. In the following description, side surfaces of the storage container 11 along the long-side direction in a plan view will be referred to as a pair of main side surfaces 11s1, and side surfaces of the storage container 11 along the short-side direction in the plan view will be referred to as a pair of sub-side surfaces 11s2.

FIGS. 6 and 7 illustrate that the two cell groups 10 each including the eight cylindrical battery cells 5 (1) to 5 (8) are arranged in two rows along the x-axis direction and contained in the storage container 11. The storage container 11 includes the heater 11h, the fan 11f, and the temperature sensor 11t at appropriate portions, though FIGS. 6 to 8 omit the illustration.

Specifically, the storage container 11 includes a lid that is not illustrated at the top to ensure heat insulation of the storage container 11. The lid has a structure in which external surfaces and inner surfaces are each made of a metal plate and a heat-insulating material fills the inner portion, similarly to the storage container 11. Furthermore, a sand material fills an interspace other than objects placed in the storage container 11. The sand material fills the interspace to reduce the impact on the surrounding of the battery cells 5 in case the battery cells 5 have malfunctions such as a fracture, being abnormally heated, and leakage of the active materials. Examples of the sand material include expanded vermiculite (vermiculite) and silica sand.

A negative terminal 5n protrudes from the center of one of the ends (an upper end in a state of being contained in the storage container 11) of the battery cell 5, and a positive terminal 5p protrudes from the outer edge of the end. In each of the cell groups 10, for each pair of the battery cells 5 arranged adjacent to each other along the long-side direction of the container 11 in the plan view, the positive terminal 5p of one battery cell 5 is electrically connected to the negative terminal 5n of the other battery cell 5 through a connection terminal C1. FIG. 6 illustrates only a part of the connection terminals C1.

Furthermore, an external connection terminal C2 protruding from the main side surface 11s1 to outside of the container 11 is connected to each of the positive terminal 5p of the battery cell 5 (1) disposed at one end of each of the cell groups 10 and the negative terminal 5n of the battery cell 5 (8) disposed at the other end. The external insulating terminals are insulated from the metal plates in the storage container 11 by a predetermined insulating component, though the illustration is omitted.

As illustrated in FIGS. 7 and 8, a connector 20 that is not illustrated in FIG. 6 is formed on one of the sub-side surfaces 11s2 of the storage container 11.

The connector 20 includes a first connection copper plate 21, a second connection copper plate 22, a third connection copper plate 23, a fourth connection copper plate 24, a fifth connection copper plate 25, and a sixth connection copper plate 26. These first to sixth connection copper plates 21 to 26 are copper plates each with a thickness approximately ranging from 0.3 mm to 3.0 mm. Alternatively, the first to sixth connection copper plates 21 to 26 may be platy base materials which have equivalent thicknesses and to which copper foil is attached. The first to sixth connection copper plates 21 to 26 are formed as an energizing path when the storage battery set 2 operates, which is to be described later. The first to fourth connection copper plates 21 to 24 are bent from the sub-side surface 11s2 of the storage container 11 toward one of the pair of main side surfaces 11s1 and formed.

FIG. 7 illustrates that the cell group 10 located frontward in the drawing perspective is electrically connected to the connector 20 on one of the pair of main side surfaces 11s1. Specifically, FIG. 7 illustrates that a cable C4 connects the external connection terminal C2 connected to the battery cell 5 (1) to one of the ends of the first connection copper plate 21 and that a cable C3 connects the external connection terminal C2 connected to the battery cell 5 (8) to one of the ends of the second connection copper plate 22.

Furthermore, the other cell group 10 is electrically connected to the connector 20 through a cable that is not illustrated, on the other of the pair of main side surfaces 11s1, though the illustration is omitted. In other words, the external connection terminal C2 connected to the battery cell 5 (1) is connected to one of the ends of the third connection copper plate 23, and the external connection terminal C2 connected to the battery cell 5 (8) is connected to one of the ends of the fourth connection copper plate 24.

Moreover, a gate switch G is disposed between each of the first to fourth connection copper plates 21 to 24 and the fifth connection copper plate 25 as illustrated in FIG. 8. Furthermore, the gate switch G is also disposed each between the second connection copper plate 22 and the third connection copper plate 23, between the fourth connection copper plate 24 and the sixth connection copper plate 26, and between the fifth connection copper plate 25 and the sixth connection copper plate 26.

The aforementioned electrical connection through the connection terminals C1, the external connection terminals C2, and the cables C3 and C4 corresponds to the circuit structure illustrated in, for example, FIG. 2.

That is to say, portions between each of the first to fourth connection copper plates 21 to 24 and the fifth connection copper plate 25 correspond to the bridge paths Lca to Lcd. The gate switches G disposed on the respective portions correspond to the bridge gates G2a, G2b, G2c, G2d, and G2e. In addition, the gate switch G between the second connection copper plate 22 and the third connection copper plate 23 corresponds to the inter-group gate G1. Furthermore, the gate switch G between the fourth connection copper plate 24 and the sixth connection copper plate 26 corresponds to the module terminal gate G3. And then, the gate switch G between the fifth connection copper plate 25 and the sixth connection copper plate 26 corresponds to the terminal gate G2e.

Consequently, a following path corresponds to the main path La: the first connection copper plate 21 -> (the cable C4 and the external connection terminal C2) -> the cell group 10 (the battery cell 5 (1) to the battery cell 5 (8) connected in series) -> (the external connection terminal C2 and the cable C3) -> the second connection copper plate 22 -> the gate switch G (G1) -> the third connection copper plate 23 -> (the cable and the external connection terminal C2) -> the cell group 10 (the battery cell 5 (1) to the battery cell 5 (8) connected in series) -> (the external connection terminal and the cable C4) -> the fourth connection copper plate 24-> the gate switch G (G3) -> the sixth connection copper plate 26.

Furthermore, the fifth connection copper plate 25 corresponds to the bypass path Lb in the storage container 11.

In addition, another end 21a of the first connection copper plate 21 and another end 26a of the sixth connection copper plate 26 are terminals for electrical connection with the different storage containers 11, respectively.

For example, when FIGS. 6 to 8 illustrate the storage container 11 formed for the module battery 4 (k) including the failed battery cell 5x (1) in the string ST1 in FIG. 4, the energizing path in bypassing is as following: the first connection copper plate 21 -> (the cable C4 and the external connection terminal C2) -> the cell group 10 (the battery cell 5 (1) to the battery cell 5 (8) connected in series) -> (the external connection terminal C2 and the cable C3) -> the second connection copper plate 22->the gate switch G (G2b) -> the fifth connection copper plate 25 -> the gate switch G (G2e) -> the sixth connection copper plate 26.

As described above, FIGS. 6 to 8 illustrate that the module battery 4 including the circuit structure exemplified in FIG. 2 can be actually implemented.

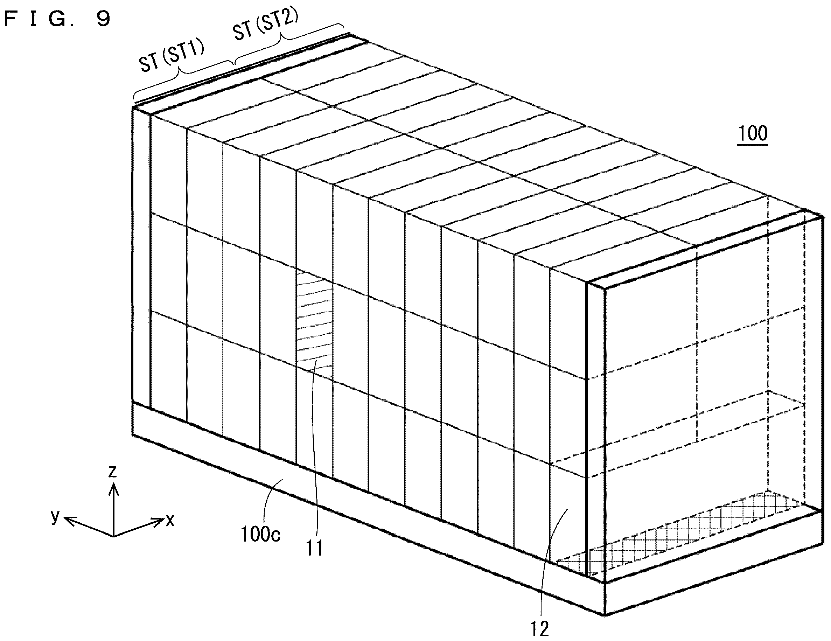

FIG. 9 illustrates a schematic structure of a module battery compartment 100 that contains, in a container 100c, a plurality of the storage containers 11 each with the structure illustrated in FIGS. 6 to 8. FIG. 9 illustrates the xyz coordinates common to those in FIGS. 6 to 8 in relation to the storage containers 11. In the following description, each of the strings ST of the storage battery set 2 includes 35 of the storage containers 11 (n = 35).

FIG. 9 illustrates that 12 portions × 3 columns = 36 portions of storage container storage portions are prepared on the container 100c in two rows for the strings ST (ST1 and ST2) and that 35 of the storage containers 11 of the string ST are disposed in the 35 portions in each of the rows, except the one at one end at the bottom column. The terminal unit 12 is disposed for the two rows in one portion at the one end at the bottom column whose bottom is hatched.

Specifically, the storage containers 11 in each of the strings ST are disposed so that the respective connectors 20 are exposed on the side surface (the z-x plane) of the module battery compartment 100. In other words, the connector 20 is disposed in a diagonally shaded area in each of the storage containers 11.

Since each of the storage containers 11 includes the mounted portions 11b1 and the mounting portions 11c as described above, the storage containers 11 are suitably stack mounted as illustrated in FIG. 9.

Connecting the other end 21a of the first connection copper plate 21 of one of the storage containers 11 to the other end 26a of the sixth connection copper plate 26 of a different one of the storage containers 11 with the storage containers 11 being stacked according to the aforementioned aspect enables to actually form the storage battery sets 2 with the circuit structure illustrated in FIGS. 1 and 2.

As described above, in a storage battery system including a string including multiple battery cells that are high-temperature operating secondary batteries and connected in series according to the embodiment, the battery cells included in the string are divided into a plurality of cell groups, a bypass path allowing each of the cell groups to be individually bypassed is provided in the string, and therefore, even when a certain one of the battery cells fails, at least one of the cell groups including the cell group to which the failed battery cell belongs is bypassed, so as to allow a current to continue to flow through the string including the failed battery cell.

Consequently, the embodiment implements a highly redundant module battery against failures of battery cells, and a rechargeable battery system including the same.

In the storage battery system according to the embodiment, gate switches are disposed between the cell groups connected in series with each other and in the bridge paths connecting the bypass path to upstream and downstream sides of the cell groups. When the energizing path is bypassed, the number of the gate switches located in the energizing path is minimized through appropriate combinations of the ON/OFF states of these gate switches. This suitably reduces the impact of a voltage drop caused by switching the gate switches due to a failure in a battery cell.

Furthermore, in the storage battery system according to the embodiment, the two strings with the same structure are connected in parallel, and, in the case that a battery cell in one of the strings fails and the cell group including the failed battery cell is bypassed, one of the cell groups in the other string is also bypassed. This reduces the maximum electromagnetic forces in the respective strings by the same value. Even when a battery cell fails in any of the strings, the electromagnetic forces in the two strings remain at the same value. This also contributes to ensuring the redundancy against failures in battery cells.

In the storage battery system according to the embodiment, when a battery cell fails, the ON/OFF state of each of the gate switches is switched per module battery including the failed battery cell. This does not impact the other module batteries belonging to the same string. In other words, switching control on the ON/OFF state is completed within each of the module batteries. As long as preventing an increase in the number of gate switches to be used only in the module battery subjected to the switching control on the ON/OFF state, the number of gate switches to be used is never increased in the whole strings.

Particularly, reducing the number of battery cells included in one of the cell groups to a relatively smaller value and increasing the number of storage containers lead to not only sufficiently maintaining the maximum electromagnetic force but also preventing an increase in the overload ratio of the battery cells.

### [Modifications]

Although the above embodiment describes an example of the storage battery set 2 constituted by the two strings ST connected in parallel, this is not an essential aspect but many more strings ST may be further connected in parallel in the storage battery set 2.

The manner in which the storage battery set 2 is constituted by the two strings ST is suitable for facilitating disposing all the storage containers 11 constituting the module batteries 4 belonging to each of the strings ST without any space to form the external surface of the module battery compartment 100 as that illustrated in FIG. 9.

Furthermore, the energizing path is switched between the main path La and the bypass path Lb using the gate switches each including the semiconductor elements SD according to the embodiment. Instead, the embodiment may adopt an aspect of switching the energizing path using mechanical switches. As long as the bypassing is implemented as according to the embodiment, how to establish connections between the cell groups and the switches may differ from that according to the embodiment.

## Claims

1. A storage battery set including at least one string in which multiple battery cells are connected in series, the multiple battery cells being high-temperature operating secondary batteries, comprising:
a plurality of cell groups into which the multiple battery cells included in the at least one string are divided;
a main path through which the plurality of cell groups are connected in series; and
a bypass path allowing each of the plurality of cell groups to be individually bypassed in the at least one string,
wherein, when at least one of the multiple battery cells fails, an energizing path is diverted from the main path to the bypass path at a corresponding one of the plurality of cell groups to which the failed battery cell belongs.

2. The storage battery set according to claim 1, further comprising:
switches that can switch between an ON conduction state and an OFF conduction state, disposed each between the cell groups connected in series through the main path from among the plurality of cell groups, and in bridge paths connecting the bypass path to upstream and downstream sides of the cell groups,
wherein, when the at least one of the multiple battery cells fails, the energizing path is diverted from the main path to the bypass path by switching one of the switches corresponding to the cell group to which the failed battery cell belongs between the ON state and the OFF state.

3. The storage battery set according to claim 2,
wherein the switches are gate switches each including semiconductor elements.

4. The storage battery set according to claim 3,
wherein a module battery is provided per two of the cell groups connected in series from among the plurality of cell groups,
the bypass path is provided for each of the module batteries, and
each of the module batteries includes as the gate switches:
an inter-group gate in the main path between the two cell groups;
a module terminal gate in the main path between another module battery connected to the module battery and a downstream side of the two cell groups;
four bridge gates connecting the bypass path provided in the module battery to an upstream side and the downstream side of the two cell groups in the main path; and
a terminal bridge gate connecting the bypass path formed in the module battery to a most downstream side of the main path.

5. The storage battery set according to claim 4,
wherein each of the module batteries is contained in a storage container,
the storage container includes a heater and a cooling fan,
the battery cells belonging to the two cell groups are arranged for each of the cell groups and contained in the storage container in two rows, and
the storage container includes a connector including the inter-group gate, the module terminal gate, and the four bridge gates, on a side surface of the storage container being vertical to a direction in which the battery cells are arranged.

6. The storage battery set according to any one of claims 1 to 5, wherein each of the plurality of cell groups include eight of the battery cells.

7. The storage battery set according to any one of claims 1 to 6,
wherein the at least one string includes two strings of a first string and a second string, and
when the energizing path is bypassed in the first string, an energizing path in the second string is also bypassed for cell groups as many as cell groups bypassed in the first string.

8. A storage battery system, comprising:
the storage battery set according to any one of claims 1 to 7 further including a power conversion system connected to the at least one string; and
a controller controlling the storage battery set,
wherein the storage battery set is connected to a transformer.

9. The storage battery system according to claim 8, comprising:
a plurality of the storage battery sets; and
a plurality of the controllers controlling the respective storage battery sets,
wherein the plurality of the storage battery sets are connected in parallel with the transformer.
